# EUROPEAN PATENT APPLICATION

(11) **EP 1 724 753 A1**
(43) Date of publication of application: **22.11.2006**
(21) Application number: 05709536.6
(22) Date of filing: 01.02.2005
(51) Int. Cl.: G09G 5/00

(54) **IMAGE PROCESSING DEVICE AND METHOD, DISPLAY DEVICE AND METHOD, AND ELECTRONIC DEVICE**

(30) Priority: 12.03.2004 JP 2004070480
(71) Applicant: SONY CORPORATION, Tokyo 141 (JP)
(72) Inventor: SHIRAI, Tsuneo c/o Sony Corporation, Shinagawa-ku, Tokyo 1410001 (JP); MORITA, Shintaro c/o Sony Corporation, Shinagawa-ku, Tokyo 1410001 (JP); SHIMODA, Tetsuya c/o Sony Corporation, Shinagawa-ku, Tokyo 1410001 (JP)
(74) Representative: Nicholls, Michael John
(86) International application number: PCT/JP2005/001390
(87) International publication number: WO 2005/088601

(57) **Abstract**

The present invention relates to an image processing apparatus and method, a display apparatus and method, and an electronic apparatus in which a driver can be controlled by superposing panel setting data on an image signal. For example, a controller (63) supplies driver control signals to an image processor (61) by serial communications. The image processor (61) stores digital signals input from a video-signal processor (12) in a video memory (14), and reads the digital signals and executes predetermined signal processing as needed, thereby converting the digital signals into video signals having horizontal and vertical blanking periods. At this time, the image processor (61) superposes panel setting data in accordance with the driver control signals from the controller (63) on the vertical blanking periods of the converted video signals.

## Description

### Technical Field

The present invention relates to image processing apparatuses and methods, display apparatuses and methods, and electronic apparatuses, i.e., to an image processing apparatus and method, a display apparatus and method, and an electronic apparatus with which driving of display elements can be controlled appropriately.

### Background Art

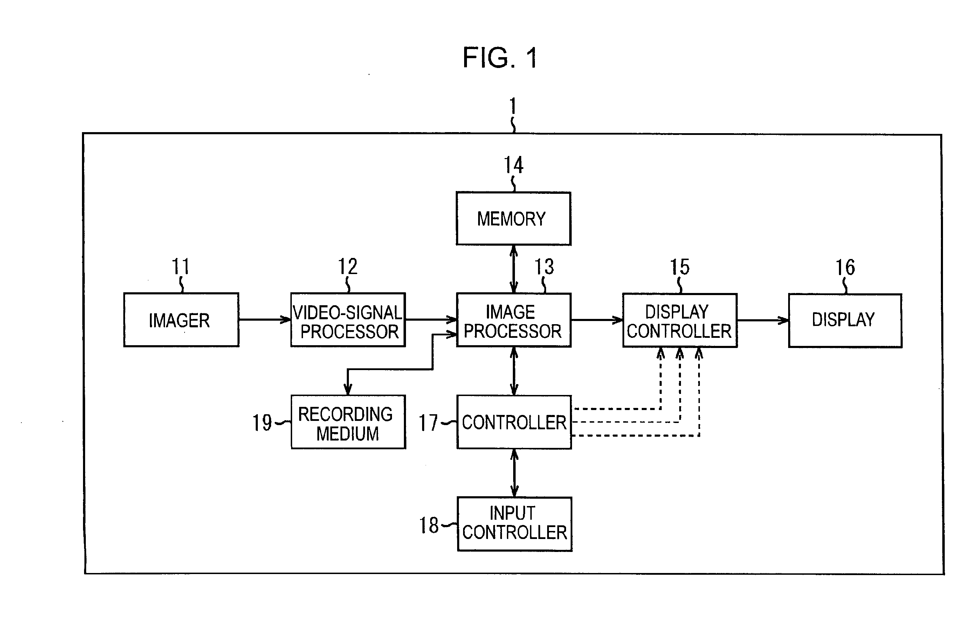

Fig. 1 shows an example construction of a digital video camera 1 that has hitherto been available.

Video signals acquired by imaging by an imager 11 implemented by a lens, a CCD, and so forth are input to a video processor 12. The video processor 12 executes predetermined camera signal processing to convert the input video signals into digital signals, and supplies the digital signals to an image processor 13.

The image processor 13 stores the input digital video signals in a video memory 14, and reads the digital video signals and executes predetermined signal processing as needed, thereby generating video signals having horizontal and vertical blanking periods. The image processor 13 outputs the converted video signals to a display controller 15. Blanking periods serve to prevent images from being displayed in retrace periods, and blanking signals are included in the periods.

Furthermore, the image processor 13 compresses the input digital video signals, and records the compressed digital video signals, for example, on a recording medium 19 that is detachable from the digital video camera 1.

The display controller 15 is a driving apparatus for a display 16. The display controller 15 receives driver control signals from a controller 17 by serial communications, and displays on the display 16 an image corresponding to the video signals input from the image processor 13 based on panel setting data represented by the driver control signals (converts the input image signals into signals in a format compatible with display elements of the display 16 based on the panel setting data).

For example, based on the panel setting data represented by the driver control signals input from the controller 17, the display controller 15 sets and updates setting values of panel setting parameters (e.g., RGB, AMP, amplitude of a signal of the potential of a common electrode of liquid crystal, DC component of the signal of the potential of the common electrode of liquid crystal, contrast, inversion of image, white balance, and ON/OFF of backlight), and controls image display on the display 16 based on the setting values.

The display 16 is implemented, for example, by a liquid crystal panel. The display 16 is driven by the display controller 15 so that a certain image is displayed.

The controller 17 controls the image processor 13, an input controller 18, and the display controller 15. More specifically, the controller 17 outputs panel setting data to the display controller 15 as driver control signals by serial communications, the panel setting data serving for setting of panel setting parameters according to operations of various dials, buttons, or the like that are not shown.

The input controller 18 notifies the controller 17 of operations of the various dials, buttons, or the like that are not shown.

The driver control signals include a clock SCK, data SI (panel setting data), and a clock CS. Thus, between the controller 17 and the display controller 15, three lines for serial communications are provided in total. The data SI is read at each rise of the clock SCK. The reading operation is started from each fall of the clock CS.

The controller 17 and the display controller 15 are usually implemented by separate devices, and are provided at remote positions. Thus, when lines for serial communications are provided therebetween, reduction of the size of apparatus is inhibited, and incorrect operations could occur due to interference between lines. Thus, it has been proposed to reduce the number of serial communication lines themselves, as described in Patent Document 1.
[Patent Document 1] JapaneseUnexamined Patent Application Publication No. 2001-69583

### Disclosure of Invention

However, even when it is attempted to reduce the number of serial communication lines themselves, driver control signals themselves are needed, so that serial communication lines are needed between the controller 17 and the display controller 15. Thus, the problem described above has not been solved.

The present invention has been made in view of the situation described above, and it allows the display controller 15 to be controlled via the image processor 13.

An image processing apparatus according to the present invention includes superposing means for superposing control data for controlling driving means on a predetermined segment of an image signal; and outputting means for outputting the image signal with the control data superposed thereon to the driving means.

The predetermined segment may be a segment in which vertical blanking data of the image signal is included.

In the predetermined segment, the control data may be superposed so that the control data is provided for each parameter of the display apparatus that is to be controlled by the driving means and so that the control data for each parameter is provided repeatedly a plurality of times.

An image processing method according to the present invention includes a superposing step of superposing control data for controlling driving means of a display apparatus on a predetermined segment of an image signal that is input to the driving means; and a sending step of sending the image signal with the control data superposed thereon to the driving means.

In the image processing apparatus and method according to the present invention, control data for controlling driving means of a display apparatus is superposed on the predetermined segment of an image signal input to the driving means, and the image signal with the control signal superposed thereon is sent to the driving means.

A display apparatus according to the present invention includes a display configured to display an image; driving means for driving the display; and extracting means for extracting control data for controlling the display, the control data being superposed on a predetermined segment of an input image signal; wherein the driving means drives the display based on the control data extracted by the extracting means so that an image corresponding to the image signal is displayed.

The predetermined segment may be a segment in which vertical blanking data of the image signal is included.

In the predetermined segment, the control data may be superposed so that the control data is provided for each parameter of the display that is to be controlled by the driving means and so that the control data for each parameter is provided repeatedly a plurality of times.

The extracting means may integrate the control data for each parameter, the control data being provided repeatedly a plurality of times, and use data according to a result of the integration as the control data.

A display method according to the present invention includes an extracting step of extracting control data for controlling driving means of a display apparatus configured to display an image, the control data being superposed on a predetermined segment of an image signal that is sent to the driving means; and a driving step of driving the display apparatus based on the control data extracted by processing in the extracting step.

In the display apparatus and method according to the present invention, control data for controlling driving means of a display apparatus configured to display an image, superposed on a predetermined segment of an image signal that is sent to the driving means, is extracted, and the display apparatus is driven based on the control data extracted.

An electronic apparatus according to the present invention includes an image processor configured to execute predetermined signal processing on an input signal and to output an image signal; a display controller configured to receive input of the image signal; and a display driven by input of a driving signal output from the display controller; wherein the image processor superposes control data for controlling the display controller on a segment in which vertical blanking data of the image signal is included, and wherein the display controller extracts the control data superposed on the image signal, and outputs a driving signal for driving the display based on the control data extracted.

In the electronic apparatus according to the present invention, including an image processor configured to execute predetermined signal processing on an input signal and to output an image signal; a display controller configured to receive input of the image signal; and a display driven by input of a driving signal output from the display controller, the image processor superposes control data for controlling the display controller on a segment in which vertical blanking data of the image signal is included, and the display controller extracts the control data superposed on the image signal, and outputs a driving signal for driving the display based on the control data extracted.

According to the present invention, panel setting data can be superposed on a predetermined segment of a video signal. For example, problems relating to serial communication lines for sending driver control signals can be overcome.

### Brief Description of the Drawings

Fig. 1 is a block diagram showing an example construction of a video camera that has hitherto been available.
Fig. 2 is a block diagram showing an example construction of a video camera according to the present invention.
Fig. 3 is a block diagram showing an example construction of an image processor shown in Fig. 2.
Fig. 4 is a timing chart for explaining an operation of the image processor shown in Fig. 2.
Fig. 5 is a diagram showing details of F in Fig. 4.
Fig. 6 is a block diagram showing an example construction of a display controller shown in Fig. 2.
Fig. 7 is a timing chart for explaining an operation of the display controller shown in Fig. 2.
Fig. 8 is a block diagram showing another example construction of the display controller shown in Fig. 2.
Fig. 9 is a timing chart for explaining an operation of the display controller shown in Fig. 8.
Fig. 10A is a diagram for explaining an operation of the display controller shown in Fig. 8.
Fig. 10B is a diagram for explaining an operation of the display controller shown in Fig. 8.
Fig. 11 is a block diagram showing another example construction of a video camera according to the present invention.

### Reference Numerals

11: imager; 12: video-signal processor; 14: memory; 16: display; 18: input controller; 19: recording medium; 61: image processor; 62: display controller; 63: controller; 71: input unit; 72: decoder; 73: register set; 74: selector; 75: clock generator; 76: timing generator; 77: counter; 78: selector; 79: switch; 80: D-FF; 81: register; 91: decoder; 92: driver; 101: latch-pulse generator; 102: serial/parallel converters; 161: latch-pulse generator; 162: integration/latch units; 163: comparators; 202: adjusting jig

### Best Mode for Carrying Out the Invention

Now, embodiments of the present invention will be described. The correspondence between the inventions described in this specification and embodiments is, for example, as follows. This description is intended to assure that embodiments supporting the inventions described in this specification are described in this specification. Thus, even if an embodiment described in the embodiments of the present invention is not described as relating to an invention, that does not necessarily mean that the embodiment does not relate to that invention. Conversely, even if an embodiment is described herein as relating to an invention, that does not necessarily mean that the embodiment does not relate to other inventions.

Furthermore, this description should not be construed as covering all the inventions described in this specification. That is, the description does not deny the existence of inventions that are described in this specification but not claimed in this application, i.e., the existence of inventions that in future may be claimed by a divisional application or that may additionally appear through amendments.

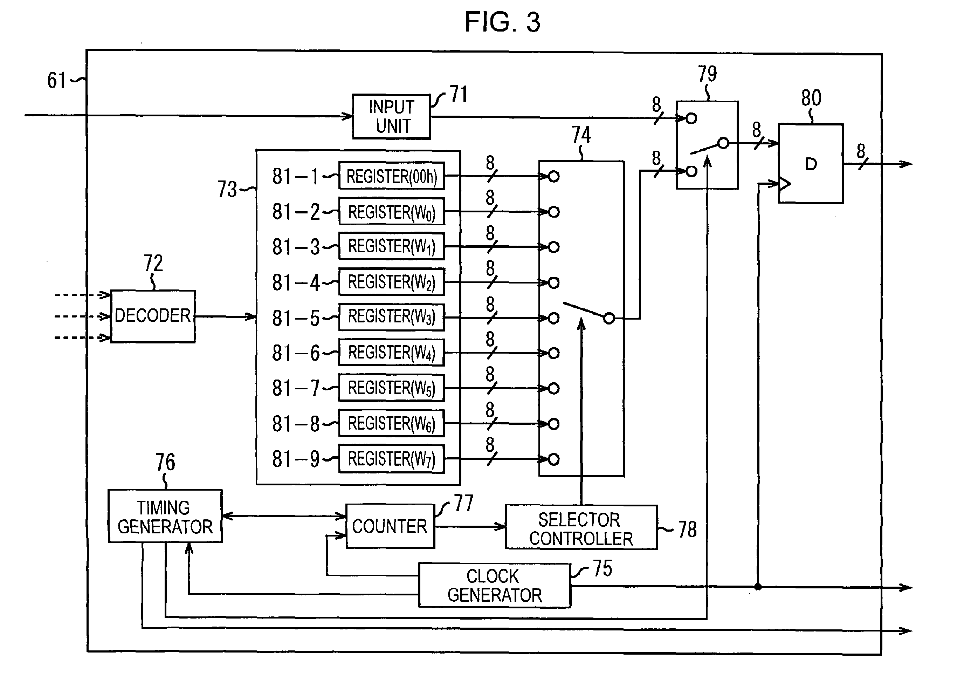

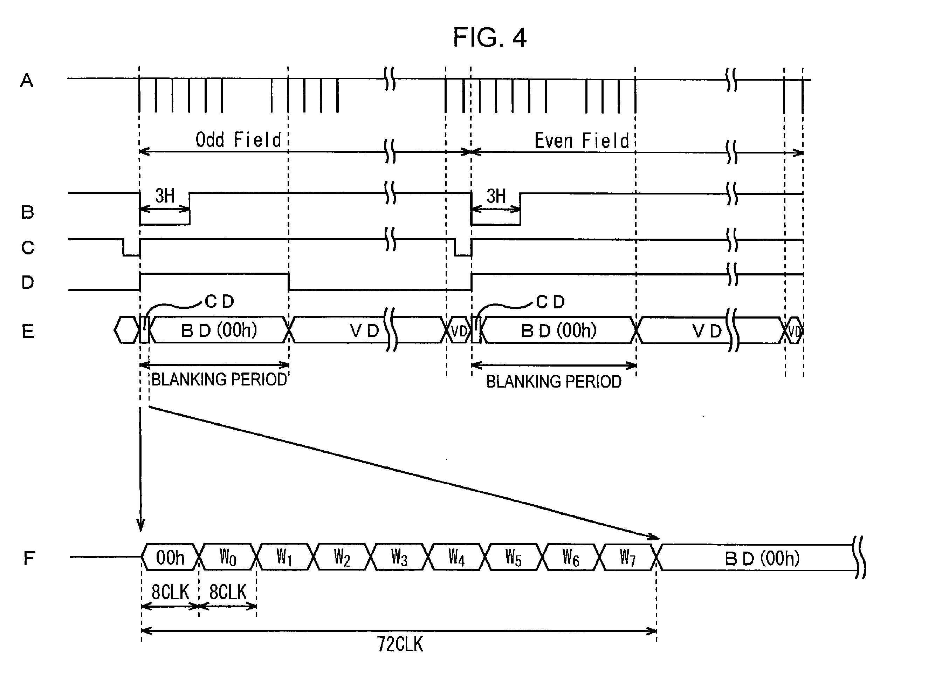

An image forming apparatus according to the present invention includes superposing means (e.g., a register set 73 to switch 79 in Fig. 3) for superposing control data (data W0 to W7) in Fig. 4) for controlling driving means on a predetermined segment of an image signal, and outputting means (e.g., D-FF 80 in Fig. 3) for outputting the image signal with the control data superposed thereon to the driving means.

The predetermined segment may be a segment including vertical blanking data of the image signal (e.g., a segment corresponding to a blanking period in Fig. 4).

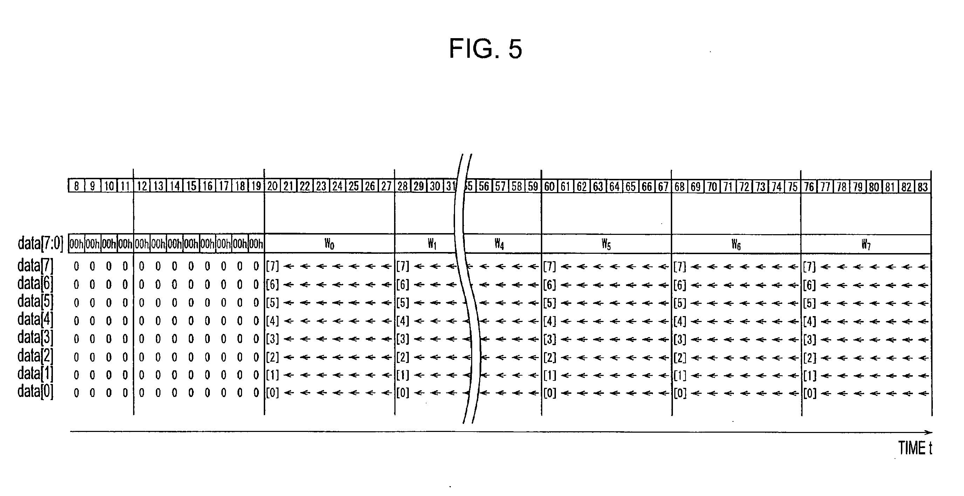

In the predetermined segment, the control data may be superposed so that the control data is provided for each parameter of the display apparatus that is to be controlled by the driving means and so that the control data for each parameter is provided repeatedly a plurality of times (e.g., as shown in Fig. 5).

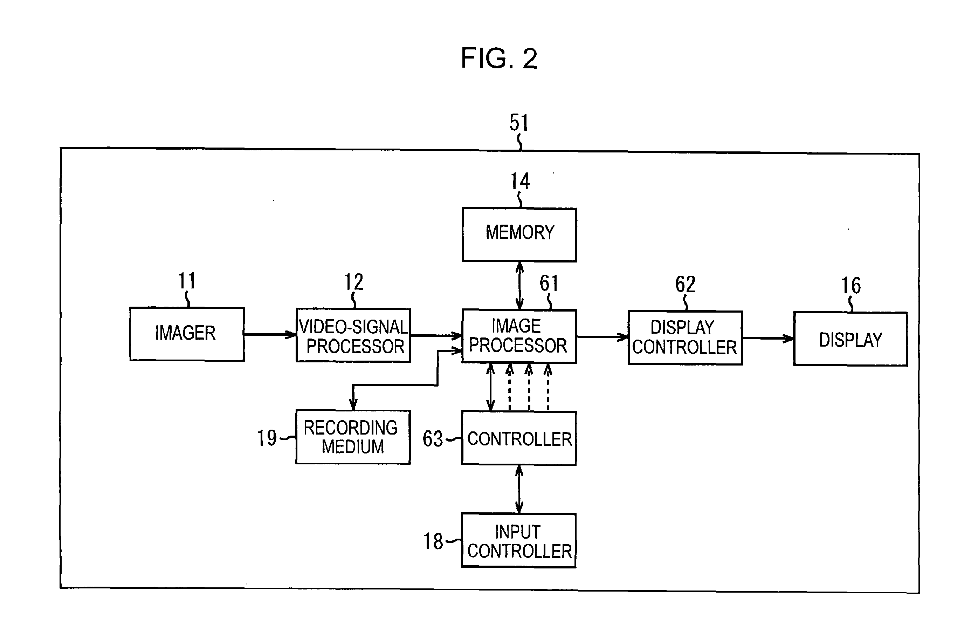

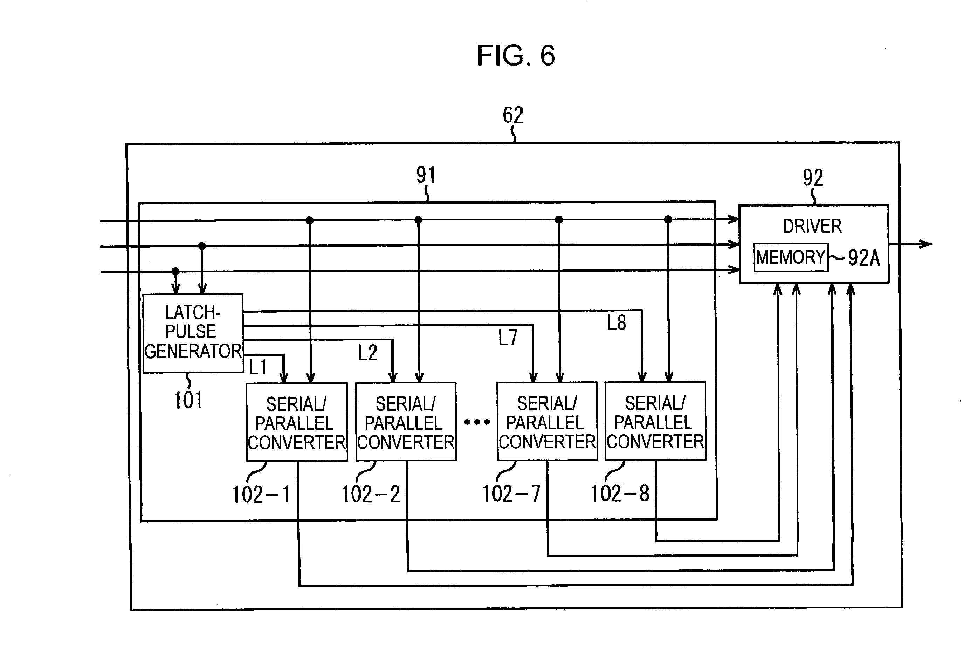

A display apparatus according to the present invention includes a display (e.g., a display 16 shown in Fig. 2) configured to display an image; driving means (e.g., a driver 92 shown in Fig. 6) for driving the display; and extracting means (e.g., a decoder 91 shown in Fig. 6) for extracting control data for controlling the display, the control data being superposed on a predetermined segment of an input image signal; wherein the driving means drives the display based on the control data extracted by the extracting means so that an image corresponding to the image signal is displayed.

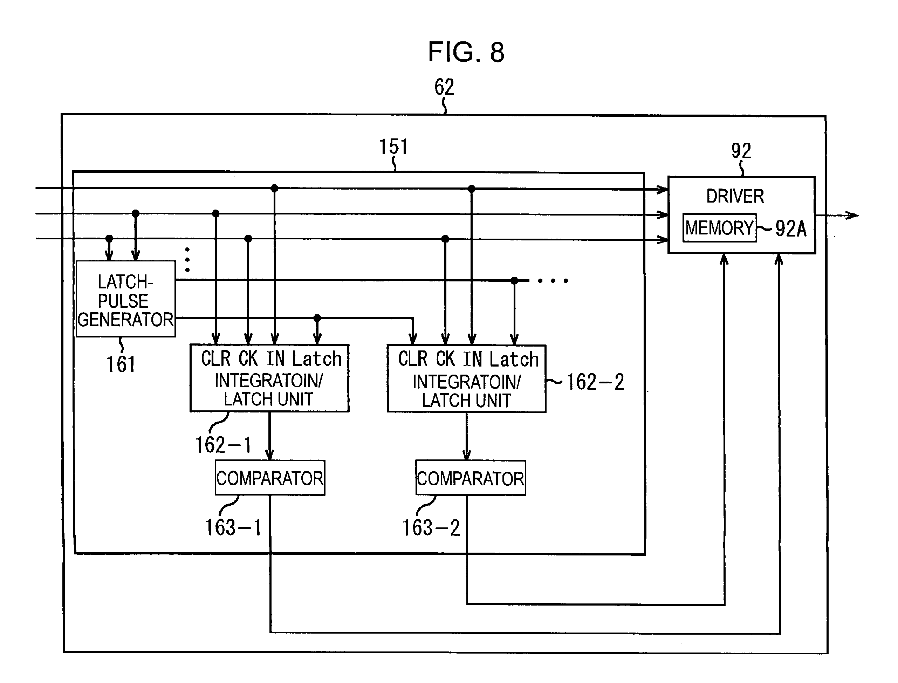

The extracting means (e.g., a decoder 151 shown in Fig. 8) may integrate the control data for each parameter, the control data being provided repeatedly a plurality of times, and use data according to a result of the integration as the control data.

An electronic apparatus according to the present invention includes an image processor (an image processor 61 shown in Fig. 2) configured to execute predetermined signal processing on an input signal and to output an image signal; a display controller (e.g., a display controller 62 shown in Fig. 2) configured to receive input of the image signal; and a display (e.g., the display 16) driven by input of a driving signal output from the display controller; wherein the image processor superposes control data for controlling the display controller on a segment in which vertical blanking data of the image signal is included, and wherein the display controller extracts the control data superposed on the image signal, and outputs a driving signal for driving the display based on the control data extracted.

Fig. 2 shows an example construction of a digital video camera 51 according to the present invention. The digital video camera 51 includes an image processor 61, a display controller 62, and a controller 63 instead of the image processor 13, the display controller 15, and the controller 17 shown in Fig. 1. Other parts are the same as those in Fig. 1, so that descriptions thereof will be omitted.

The controller 63 is a microcomputer including what are called a CPU, a ROM, and a RAM. The controller 63 controls the input controller 18 and the image processor 61, and it supplies driver control signals (clock SCK, data SI, and clock CS) to the image processor 61 by serial communications.

The image processor 61 stores digital video signals input from the video-signal processor 12 in the video memory 14, and it executes predetermined signal processing while reading the digital video signals as needed, thereby generating video signals including horizontal and vertical blanking periods.

At this time, the image processor 61 superposes panel setting data in accordance with driver control signals from the controller 63 on a predetermined segment of the video signals generated. For example, the panel setting data is placed in a segment including vertical blanking data.

The video signals with the panel setting data superposed thereon is supplied to the display controller 62.

More specifically, in the digital video camera 51, three serial communication lines are provided between the controller 63 and the image processor 61, not between the controller 63 and the display controller 62. The controller 63 and the image processor 61 are usually implemented within a single device, and the distance therebetween is shorter than the distance between the controller 63 and the display controller 62. Thus, compared with the case where serial communication lines are provided between the controller 63 and the display controller 62, the serial communication lines can be shortened. This serves to reduce the size of the apparatus, and to overcome problems due to interference.

The image processor 61 captures individual panel setting data of data SI at each rise of the clock SCK of the driver control signals. The reading operation is started at a fall of the clock CS.

The display controller 62 extracts panel setting data superposed on the video signals supplied from the image processor 61, and displays an image corresponding to the video signals on the display 16 based on setting values of panel setting parameters corresponding to the panel setting data.

Fig. 3 shows an example construction of parts of the image processor 61 that are relevant to the present invention.

An input unit 71 inputs a video signal (8 bits) supplied from the video-signal processor 12 to the image processor 61, and outputs the video signal to a switch 79.

A decoder 72 receives input of the driver control signals (clock SCK, clock CK, and data SI) from the controller 63. The decoder 72 decodes the data SI as needed, and rewrites panel setting data stored in registers 81 of the register set 73 in accordance with the result.

Of the nine registers 81-1 to 81-9 of the register set 73, 00h is stored in the register 81-1, and panel setting data (8 bits) of the panel setting parameters is set in the other eight registers 81-2 to 81-9.

A selector 74 sequentially selects the registers 81 of the register set 73 under the control of the selector controller 78, and supplies 00h or the panel setting data stored in the selected register 81 to the switch 79.

A clock generator generates an operation clock, and supplies the operation clock to a timing generator 76, a counter 77, a D flip-flop (hereinafter referred to as a D-FF) 80, and the display controller 62.

The timing generator 76 generates a horizontal synchronization signal shown in part A of Fig. 4 and a vertical synchronization signal shown in part B of Fig. 4 using the clock from the clock generator 75, and outputs the horizontal synchronization signal and the vertical synchronization signal to the display controller 62.

Furthermore, the timing generator 76 outputs a reset signal to the counter 77 at the timing of a fall the vertical synchronization signal (part B of Fig. 4) (i.e., the start of a vertical blanking period), as shown in part C of Fig. 4, and pulls the switching signal to the switch 79 to H, as shown in part D of Fig. 4.

Then, the counter 77 resets its count value and starts counting, and the switch 79 selects an output of the selector 74.

Furthermore, at the timing of the end of the vertical blanking period after a predetermined period elapses from the fall of the vertical synchronization signal, the timing generator 76 pulls the switching signal to the switch 79 to L. Then, the switch 79 switches input to the output of the input unit 71.

The counter 77 resets its count value in response to the reset signal from the timing generator 76, counts the clock from the clock generator 75, and supplies the resulting count value to the selector controller 78.

The selector controller 78 controls the selector 74 so that the selector 74 sequentially selects the registers 81-1 to 81-9 of the register set 73 each time the counter 77 counts 8 clocks and so that the selector selects the register 81-1 again after selecting the register 81-9 and maintains the selection.

The count value from the counter 77 is 8 bits in this example. Since the selector controller 78 requires count value for 8 clocks (00001000), the low-order three bits b0 to b2 of the 8 bits are disregarded, and only the fourth bit b3 is checked.

The switch 79 switches its input to the output of the input unit 71 or the output of the selector 74 according to the switching signal from the timing generator 76.

A D-FF 80 supplies data from the switch 79 to the display controller 62 in synchronization with the clock from the clock generator 75.

The image processor 61 is configured as described above. That is, the timing generator 76 supplies a switching signal at H to the switch 79 in the vertical blanking period. Thus, in the vertical blanking period, as shown in part E of Fig. 4, the output from the selector 74 (panel setting data CD and blanking data BD) is supplied to the display controller 62 via the D-FF 80. Furthermore, in the vertical blanking period, the selector 78 sequentially selects the registers 81-1 to 81-9 on each set of 8 clocks, and selects the register 81-1 again after selecting the register 81-9 and maintains the selection. Thus, as shown in part F of Fig. 4, 00h and data w0 to w7 are placed in the period corresponding to the first 72 clocks of the vertical blanking period.

From the registers 81, data (panel setting data) is read on each clock, and the selector 74 selects data from the same register 81 for a period of 8 clocks. Thus, the selector 74 repeatedly outputs the same data eight times, as shown in Fig. 5.

Fig. 5 shows in detail 00h and data w0 to 7 shown in part F of Fig. 4, and it shows data for each clock (the upper part in Fig. 5). In Fig. 5, a small left-pointing arrow indicates that the value is the same as the value pointed by the arrow (the value of 1 clock before). That is, each data W is composed of a series of eight pieces of the same data (8-bit data).

After the end of the vertical blanking period, the timing generator 76 sends a switching signal at L to the switch 79. Thus, as shown in part E of Fig. 4, from then on to the start of the vertical blanking period of a next field, the output of the input unit 71 (valid video signal VD) is supplied to the display controller 62 via the D-FF 80.

In this manner, driver control signals are superposed on video signals.

Next, the construction of the display controller 62 will be described with reference to Fig. 6.

A decoder 91 supplies a video signal input from the image processor 61 to a driver 92. Furthermore, the decoder 91 extracts panel setting data superposed on the video signal, and supplies the panel setting data to the driver 92. In this example, panel setting data is included in each vertical blanking period, so that panel setting data is supplied to the driver 92 on a field-by-field basis.

Based on the panel setting data supplied from the decoder 91, the driver 92 sets and updates setting values of the relevant panel setting parameters in a memory 92A. Based on the setting values of the panel setting parameters set in the memory 92A, the driver 92 displays an image corresponding to the video signal on the display 16.

A latch-pulse generator 101 of the decoder 91 receives a vertical synchronization signal and a clock supplied from the image processor 61.

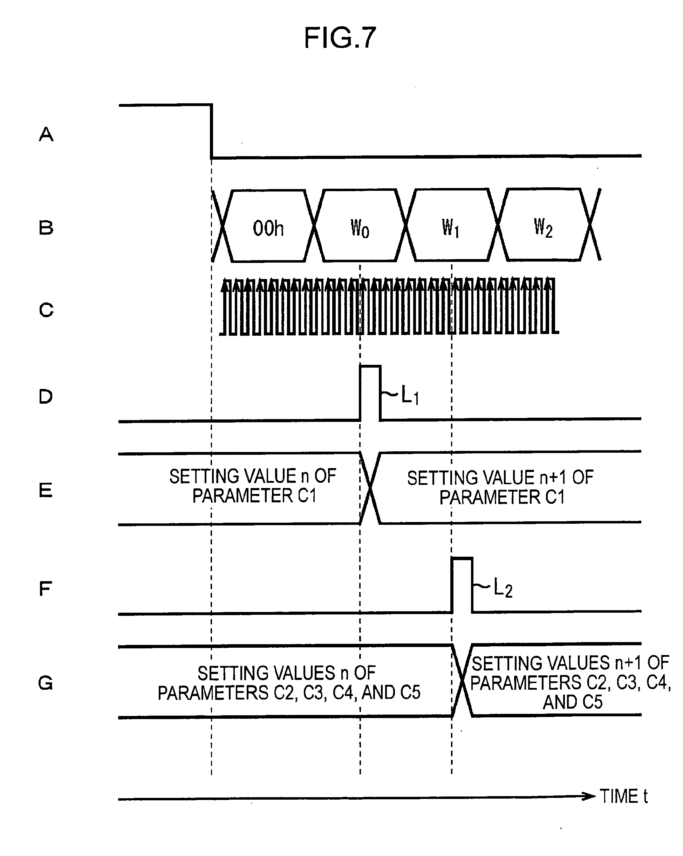

The latch-pulse generator and serial/parallel converters 102-1 to 102-8 (hereinafter simply referred to as serial/parallel converters 102 where individual distinction is not needed, which also applies to other cases) will be described with reference to a timing chart of signals input and output by the latch-pulse generator 101 and the serial/parallel converters 102, shown in Fig. 7.

The latch-pulse generator 101 resets an internal counter at the timing when a vertical synchronization signal (part A of Fig. 7) falls (at the start of a vertical blanking period). Furthermore, as shown in part D of Fig. 7, the latch-pulse generator 101 generates a latch pulse L1 at a specific timing during a period of counting 8 clocks to 16 clocks from then on, and outputs the latch pulse L1 to the serial/parallel converter 102-1. Then, the latch-pulse generator 101 generates latch pulses L2 (part F of Fig. 7) to L8 at intervals of 8 clocks, and outputs the latch pulses L2 to L8 to the serial/parallel converters 102-2 to 102-8.

The serial/parallel converters 102-1 to 102-8 receive input of latch pulses L from the latch-pulse generator 101 and the video signal (8 bits) supplied from the image processor 61.

Upon input of the latch pulses L from the latch-pulse generator 101, the serial/parallel converters 102 latch the data (8 bits) from the image processor 61 input at that timing. Then, the serial/parallel converters 102 execute serial/parallel conversion on the data, and supply specific bits of the resulting 1 byte to the driver 92.

For example, as shown in part D of Fig. 7, the serial/parallel converter 102-1 receives input of the latch pulse L1 at the timing of input of the panel setting data w0 (part B in Fig. 7). Thus, the serial/parallel converter 102-1 obtains the panel setting data w0 by serial/parallel conversion, and supplies the panel setting data w0 to the driver 92. In this example, the 8-bit data represents a value of contrast.

Furthermore, as shown in part F of Fig. 7, the serial/parallel converter 102-2 receives input of the latch pulse L2 at the timing of input of the panel setting data w1 (part B of Fig. 7). Thus, the serial/parallel converter 102-2 obtains the data w1 by serial/parallel conversion, and supplies 4 bits among the data w1 to the driver 92. In this example, the first bit of the 4 bits represents whether the image is reversed vertically. The next bit represents whether the image is reversed horizontally. The next bit represents the presence or absence of white balance. The next bit represents whether backlight is turned on or off.

Next, the driver 92 will be described. As shown in part E of Fig. 7 and part G of Fig. 7, the driver 92 sets and updates panel setting parameters based on field-based panel setting data supplied from the decoder 91.

Part E of Fig. 7 shows a timing when a setting value n of a panel setting parameter C1 (contrast), obtained from an n-th field, is updated to a setting value n+1 of the panel setting parameter C1, obtained from an (n+1)-th field. Part G of Fig. 7 shows a timing when setting values n of panel setting parameters C2 to C5, obtained from the n-th field, are updated to setting values n+1 of the panel setting parameters C2 to C5, obtained from the (n+1)-th field.

As described above, panel setting data is supplied to the display controller 62 via the image processor 61 so that the display controller 62 can extract the panel setting data appropriately. Thus, serial communication lines can be provided between the controller 63 and the image processor 61. Accordingly, compared with the case where serial communication lines are provided between the controller 63 and the display controller 62, the size of apparatus can be reduced, and interference between lines can be prevented.

Fig. 8 shows another example construction of the display controller 62. As shown in Fig. 5, panel setting data superposed on video signals from the image processor 61 includes 8 pieces of the same data for each set of 8 clocks. Thus, based on the fact that a plurality of pieces of the same panel setting data is included, the display controller 62 shown in Fig. 8 is designed so that susceptibility to noise is improved.

A decoder 151 supplies video signals input from the image processor 61 to the driver 92. Furthermore, the decoder 151 extracts panel setting data superposed on the video signals, and supplies the panel setting data to the driver 92. Also in this example, panel setting data is included in each vertical blanking period, so that panel setting data is supplied to the driver 92 on a field-by-field basis.

Based on the panel setting data supplied from the decoder 151, the driver 92 sets and updates the setting value of the relevant panel setting parameter in the memory 92A as needed, and displays an image corresponding to the video signal on the display 16 based on the panel setting value.

A latch-pulse generator 161 of the decoder 151 receives the vertical synchronization signal and the clock supplied from the image processor 61.

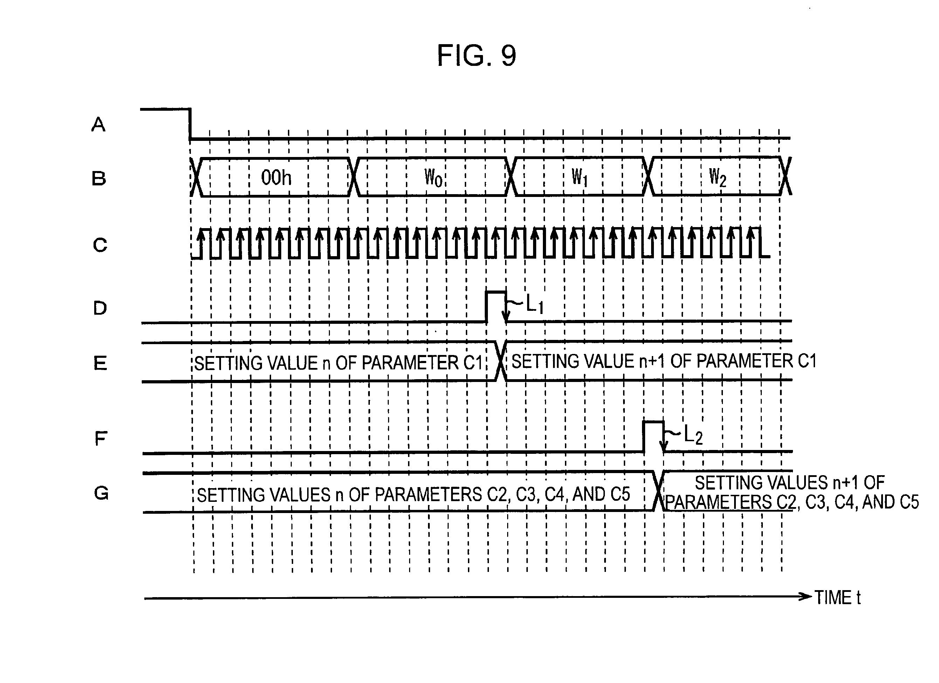

The latch-pulse generator 161 and integration/latch units 162-1 to 162-8 (the integration/latch units 162-3 to 162-8 are not shown) will be described with reference to a timing chart of signals input and output by the latch-pulse generator 161 and the integration/latch units 162, shown in Fig. 9.

The latch-pulse generator 161 resets an internal counter at a timing when a vertical synchronization signal (part A of Fig. 9) falls (at the start of a vertical blanking period). Furthermore, as shown in part D of Fig. 9, the latch-pulse generator 161 generates a latch pulse L1 at a timing of counting 16 clocks from then on, and outputs the latch pulse L1 to the integration/latch unit 162-1. Then, the latch-pulse generator 161 latch pulses L2 (part F in Fig. 9) to L8 at intervals of 8 clocks, and outputs the latch pulses L2 to L8 to the integration/latch units 162-2 to 162-8.

The integration/latch units 162 receive latch pulses L (terminals latch) from the latch-pulse generator 161, signals supplied from the image processor 61 (8 bits) (terminals IN), and clocks (terminals CK). The integration/latch units 162-2 to 162-8 also receive input of latch pulses L (terminals CLR) of previous integration/latch units 162-1 to 162-7, respectively.

For example, the integration/latch unit 162-1 clears an internal integrator at a timing when the vertical synchronization signal (part A of Fig. 9) falls (at the start of the vertical blanking period), and starts reading data (00h and data w0) (8 bits) (part B of Fig. 9) supplied from the image processor 61 on a clock-by-clock basis (part C of Fig. 9), and counts the number of 1 on a bit-by-bit basis. Then, upon input of the latch pulse L1 from the latch-pulse generator 161, the integration/latch unit 162-1 supplies count values for the respective bits at that timing to a comparator 163-1.

The integration/latch unit 162-2 clears an internal integrator upon input of the latch pulse L1 (part D of Fig. 9) to the integration/latch unit 162-1, and starts reading data (data w1) (part B of Fig. 9) supplied from the image processor 61 on a clock-by-clock basis (part C of Fig. 9), and counts the number of 1 on a bit-by-bit basis. Then, upon input of the latch pulse L2 from the latch-pulse generator 161, the integration/latch unit 162-2 supplies count values for the respective bits at that timing to a comparator 163-2.

The integration/latch units 162-3 to 162-8 that are not shown, upon input of the latch pulses L2 (part F of Fig. 9) to L7 to the previous integration/latch units 162-2 to 162-7, clear internal integrators, starts reading data w (part B of Fig. 9) supplied from the image processor 61 on a clock-by-clock basis (part C of Fig. 9), and counts the number of 1 on a bit-by-bit basis. Then, upon input of the latch pulses L3 to L8 from the latch-pulse generator 161, the serial/parallel converters 162-3 to 162-8 output count values for the respective bits at that timing to the associated comparators 163 (not shown).

The comparators 163 compares the count values of the respective bits from the integration/latch units 162 with a predetermined threshold, and outputs 1 when the count value is greater than or equal to the threshold while outputting 0 when the count value is less than the threshold.

For example, the comparator 163-1 compares the count values of the respective 8 bits from the integration/latch unit 162-1 with a threshold (e.g., 4) to generate data (8 bits) composed of bits according to the results of comparison, and outputs the data to the driver 92 as panel setting data.

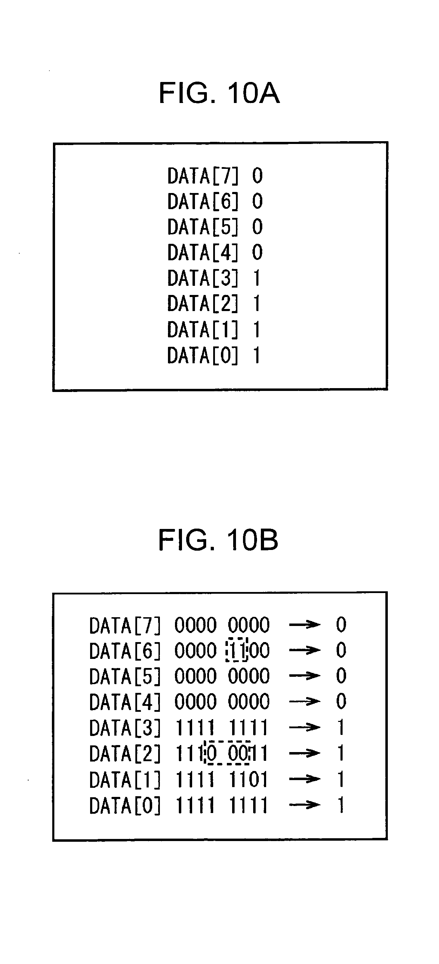

As described above, a plurality of pieces of panel setting data is integrated, and data in accordance with the results of integration is used as panel setting data. Thus, for example, when panel setting data shown in Fig. 10A is superposed on video signals, even if panel setting data is actually converted as values indicated by a dotted frame in Fig. 10B due to noise, accurate panel setting data (the same data as that shown in Fig. 10A) can be obtained, as values indicated by arrows in Fig. 10B.

For example, the second bit (DATA[2]) is supposed to be 1 (Fig. 10A). However, even if it is converted to 0 as indicated by a dotted frame in Fig. 10B, the second bit is set to 1 by comparison of the result of integration (since the number of 1 is greater than or equal to 4).

The sixth bit (DATA[6]) is supposed to be 0 (Fig. 10A). However, even if it is converted to 1 as indicated by a dotted frame in Fig. 10B, the sixth bit is set to 0 by comparison of the result of integration (since the number of 1 is less than 4).

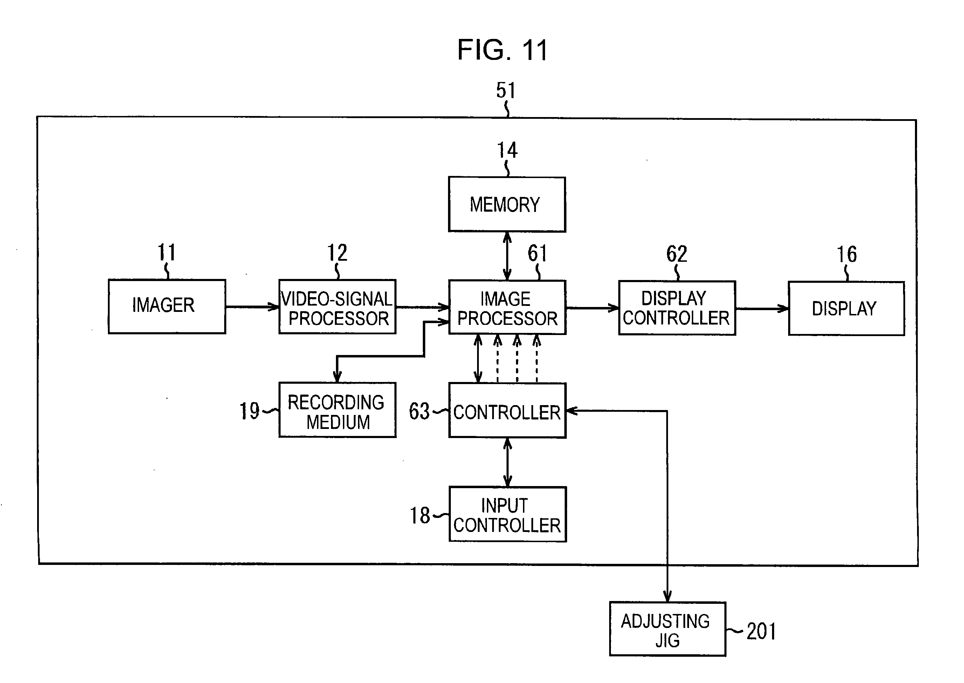

The initial setting of the display 16 can be made at the time of manufacturing using an adjusting jig 201 connected to the controller 63 of the video camera 51, as shown in Fig. 11.

Although the above description has been given in the context of a digital video camera as an example, the present invention can be applied to electronic apparatuses (e.g., cellular phones and television receivers) that are capable of displaying images.

## Claims

1. An image processing apparatus that executes predetermined signal processing on an input signal and outputs an image signal generated to driving means of a display apparatus, the image processing apparatus comprising:
superposing means for superposing control data for controlling the driving means on a predetermined segment of the image signal; and
outputting means for outputting the image signal with the control data superposed thereon to the driving means.

2. The image processing apparatus according to Claim 1,
wherein the predetermined segment is a segment in which vertical blanking data of the image signal is included.

3. The image processing apparatus according to Claim 2,
wherein, in the predetermined segment, the control data is superposed so that the control data is provided for each parameter of the display apparatus that is to be controlled by the driving means and so that the control data for each parameter is provided repeatedly a plurality of times.

4. An image processing method comprising:
a superposing step of superposing control data for controlling driving means of a display apparatus on a predetermined segment of an image signal that is input to the driving means; and
a sending step of sending the image signal with the control data superposed thereon to the driving means.

5. A display apparatus comprising:
a display configured to display an image;
driving means for driving the display; and
extracting means for extracting control data for controlling the display, the control data being superposed on a predetermined segment of an input image signal;
wherein the driving means drives the display based on the control data extracted by the extracting means so that an image corresponding to the image signal is displayed.

6. The display apparatus according to Claim 5,
wherein the predetermined segment is a segment in which vertical blanking data of the image signal is included.

7. The display apparatus according to Claim 6,
wherein, in the predetermined segment, the control data is superposed so that the control data is provided for each parameter of the display that is to be controlled by the driving means and so that the control data for each parameter is provided repeatedly a plurality of times.

8. The display apparatus according to Claim 7,
wherein the extracting means integrates the control data for each parameter, the control data being provided repeatedly a plurality of times, and uses data according to a result of the integration as the control data.

9. A display method comprising:
an extracting step of extracting control data for controlling driving means of a display apparatus configured to display an image, the control data being superposed on a predetermined segment of an image signal that is sent to the driving means; and
a driving step of driving the display apparatus based on the control data extracted by processing in the extracting step.

10. An electronic apparatus comprising:
an image processor configured to execute predetermined signal processing on an input signal and to output an image signal;
a display controller configured to receive input of the image signal; and
a display driven by input of a driving signal output from the display controller;
wherein the image processor superposes control data for controlling the display controller on a segment in which vertical blanking data of the image signal is included, and
wherein the display controller extracts the control data superposed on the image signal, and outputs a driving signal for driving the display based on the control data extracted.

## Amended claims

### Amended claims under Art. 19.1 PCT

**1.** (Amended) An image processing apparatus that executes predetermined signal processing on an input signal and outputs an image signal generated to driving means of a display apparatus, the image processing apparatus comprising:
superposing means for superposing control data for controlling the driving means on a predetermined segment of the image signal; and
outputting means for outputting the image signal with the control data superposed thereon to the driving means;
wherein the control data is provided for each parameter of the display apparatus that is to be controlled by the driving means.

**2.** The image processing apparatus according to Claim 1,
wherein the predetermined segment is a segment in which vertical blanking data of the image signal is included.

**3.** (Amended) The image processing apparatus according to Claim 2,
wherein the control data for each parameter is superposed so that the control data for each parameter is provided repeatedly a plurality of times.

**4.** (Amended) The image processing apparatus according to Claim 1, wherein the parameters include a parameter representing whether an image is reversed.

**5.** (Amended) The image processing apparatus according to Claim 1, wherein the parameters include a parameter representing the presence of absence of white balance.

**6.** (Amended) The image processing apparatus according to Claim 1, wherein the parameters include a parameter for controlling backlight.

**7.** (Amended) An image processing method comprising:
a superposing step of superposing control data for controlling driving means of a display apparatus on a predetermined segment of an image signal that is input to the driving means; and
a sending step of sending the image signal with the control data superposed thereon to the driving means;
wherein the control data is provided for each parameter of the display apparatus that is to be controlled by the driving means.

**8.** (Amended) A display apparatus comprising:
a display configured to display an image;
driving means for driving the display; and
extracting means for extracting control data for controlling the display, the control data being superposed on a predetermined segment of an input image signal;
wherein the driving means drives the display based on the parameters included in the control data extracted by the extracting means so that an image corresponding to the image signal is displayed.

**9.** (Amended) The display apparatus according to Claim 8,
wherein the predetermined segment is a segment in which vertical blanking data of the image signal is included.

**10.** (Amended) The display apparatus according to Claim 9,
wherein, in the predetermined segment, the control data is superposed so that the control data is provided for each parameter of the display that is to be controlled by the driving means and so that the control data for each parameter is provided repeatedly a plurality of times.

**11.** (New) The display apparatus according to Claim 10,
wherein the extracting means integrates the control data for each parameter, the control data being provided repeatedly a plurality of times, and uses data according to a result of the integration as the control data.

**12.** (New) A display method comprising:
an extracting step of extracting control data for controlling driving means of a display apparatus configured to display an image, the control data being superposed on a predetermined segment of an image signal that is sent to the driving means; and
a driving step of driving the display apparatus based on the parameters included in the control data extracted by processing in the extracting step.

**13.** (New) An electronic apparatus comprising:
an image processor configured to execute predetermined signal processing on an input signal and to output an image signal;
a display controller configured to receive input of the image signal; and
a display driven by input of a driving signal output from the display controller;
wherein the image processor superposes control data including parameters for the display that is to be controlled by the display controller on a segment in which vertical blanking data of the image signal is included, and
wherein the display controller extracts the control data superposed on the image signal, and outputs a driving signal for driving the display based on the parameters included in the control data extracted.
